# EUROPEAN PATENT SPECIFICATION

(11) **EP 1 929 464 B1**
(45) Date of publication and mention of the grant of the patent: **27.03.2013**
(21) Application number: 06809283.2
(22) Date of filing: 12.09.2006
(51) Int. Cl.: G09G 3/36, G02F 1/1345

(54) **DISPLAY DEVICES AND ROW VOLTAGE GENERATION CIRCUITS**
ANZEIGEVORRICHTUNGEN UND REIHENSPANNUNG-ERZEUGUNGSSCHALTUNGEN
ECRANS ET CIRCUITS DE PRODUCTION DES TENSIONS DE RANGEES

(30) Priority: 19.09.2005 EP 05108622
(43) Date of publication of application: 11.06.2008
(73) Proprietor: Chi Mei Optoelectronics Corporation, Taiwan 74147 (TW)
(72) Inventor: HECTOR, Jason, R., NL-5656 AA Eindhoven (NL)
(74) Representative: 2K Patentanwälte Blasberg Kewitz & Reichel
(86) International application number: PCT/IB2006/053233
(87) International publication number: WO 2007/034364

(56) References cited:
- EP-A1- 1 220 018
- US-A- 4 872 002
- US-A- 5 881 299
- US-A- 6 023 256
- US-A1- 2003 025 684

## Description

This invention relates to display devices, and concerns in particular the circuits used to provide the row voltages to the display pixels of an active matrix display device.

Active matrix display devices comprise an array of pixels arranged in rows and columns, and each comprising at least one thin film drive transistor and a display element, for example a liquid crystal cell. Each row of pixels shares a row conductor, which connects to the gates of the thin film transistors of the pixels in the row. Each column of pixels shares a column conductor, to which pixel drive signals are provided. The signal on the row conductor determines whether the transistor is turned on or off, and when the transistor is turned on (by a high voltage pulse on the row conductor) a signal from the column conductor is allowed to pass on to an area of liquid crystal material, thereby altering the light transmission characteristics of the material.

The frame (field) period for active matrix display devices requires a row of pixels to be addressed in a short period of time, and this in turn imposes a requirement on the current driving capabilities of the transistor in order to charge or discharge the liquid crystal material to the desired voltage level. In order to meet these current requirements, the gate voltage supplied to the thin film transistor needs to fluctuate with significant voltage swings. In the case of amorphous silicon drive transistors, this voltage swing may be approximately 30 volts.

The requirement for large voltage swings in the row conductors requires the row driver circuitry to be implemented using high voltage components.

There has been much interest in integrating the components of the row driver circuit onto the same substrate as the substrate of the array of display pixels.

One possibility is to use polycrystalline silicon for the pixel transistors, as this technology is more readily suitable for the high voltage circuit elements of the row driver circuitry. The cost advantages of producing the display array using amorphous silicon technology are then lost. However, for small displays the use of Low Temperature Poly-Silicon (LTPS) is a practical and commercially viable option. This enables integration of gate drivers on the glass substrate, under the display seal line.

There is also an interest in providing driver circuits which can be implemented using amorphous silicon technology. The low mobility of amorphous silicon transistors, as well as the stress-induced change in threshold voltage, present serious difficulties in implementing driver circuits using amorphous silicon technology.

In the case of low impedance drivers (for example as disclosed in US2003/0231735) the ageing issues are a particular problem at high temperature. In the case of high impedance drivers (for example as disclosed in WO95/31804) there is a risk of image artifacts.

Regardless of the technology used, the row driver circuit is conventionally implemented as a shift register circuit, which operates to output a row voltage pulse on each row conductor in turn.

Another issue of particular relevance to displays for battery-operated portable devices is power consumption. Reductions in power consumption have been achieved based on technological advances and improved drive schemes. Generally, reduced power consumption can be obtained at the expense of image quality. One approach is to operate a display in a number of different modes, for example a high quality high power mode and a lower quality lower power mode, for example a standby mode. One implementation of this concept is to provide a region of the display which is used for the standby mode with the remainder of the display turned off, and to use the full display for the higher quality mode.

According to the invention, there is provided a display device, as recited in claim 1 and claim 15.

A display device comprising
an array of display pixels arranged in rows and columns and provided on a common substrate;
a first row driver circuit for a first sub-set of the rows of pixels; and
a second row driver circuit for a second sub-set of the rows of pixels, is disclosed in US 5 881 299.

This arrangement enables a high quality off-substrate row driver to be used for a partial display portion. For example, this may be part of the display which is used most often, for example both in a stand by mode and normal drive mode. This part of the display is then most prone to ageing and therefore benefits from the off-substrate row driver. The second sub-set of rows preferably comprises the rest of the display, and an on-substrate row driver can be used as the time for which this part of the display is used can be less.

The array of display pixels preferably comprises an active matrix pixel array which is formed using thin film technology, for example amorphous silicon thin film technology, and each pixel comprises at least one thin film transistor. The second row driver circuit is then formed from the same thin film technology. The first row driver circuit preferably comprises a crystalline silicon integrated circuit.

The first sub-set of rows of pixels can comprise a block of rows at the top of bottom of the display. This means the driving of the full display can comprise a sequential operation of the two row driver circuits, with the column driver operated in conventional manner.

The first sub-set of rows can form a partial display area for operation in a low power mode with the second sub-set of rows turned off.

Each row driver circuit preferably provides row pulses for the respective sub-set of rows, and wherein the row pulses produced by the first and second row driver circuits are designed to have substantially the same shape.

This enables a smooth transition between the driver circuits, and pulses from the first row driver circuit can emulate pulses from the second row driver circuit and thereby be used to trigger the operation of the second row driver circuit.

The invention can be applied to liquid crystal displays, for example used in portable devices having a full display mode and a standby display mode.

The invention also provides a method of driving a display device comprising an array of display pixels on a common substrate, the method comprising:
in a first mode, driving a first sub-set of the rows using a first integrated circuit row driver circuit and not driving a second sub-set of the rows;
in a second mode driving the second sub-set of the rows using a second row driver circuit which is integrated onto the common substrate.

A timing signal can be provided from one of the first and second row driver circuits to the other of the first and second row driver circuits, such that in the second mode the operation of the first and second row driver circuits is sequential.

The invention also provides a driver circuit coupled to a display device for providing drive signals to the rows of pixels of the display device, the display device comprising an array of display pixels arranged in rows and columns and provided on a common substrate, the driver circuit comprising:
a first row driver circuit portion for a first sub-set of the rows of pixels; and
a second row driver circuit portion for a second sub-set of the rows of pixels,
wherein the first row driver circuit portion comprises an integrated circuit on a separate substrate to the common substrate, and the second row driver circuit portion comprises circuitry integrated onto the common substrate.

An example of the invention will now be described in detail with reference to the accompanying drawings, in which:
Figure 1 shows a portable device with a display in accordance with the invention;
Figure 2 shows how the row driver circuit are arranged for the device of Figure 1;
Figure 3 is used to explain how the row driver circuits are operated for a full display mode;
Figure 4 is used to explain how the row driver circuits are operated for a partial display mode;
Figure 5 is used to show how row pulses are matched between different row driver circuits in the arrangement of Figure 2.

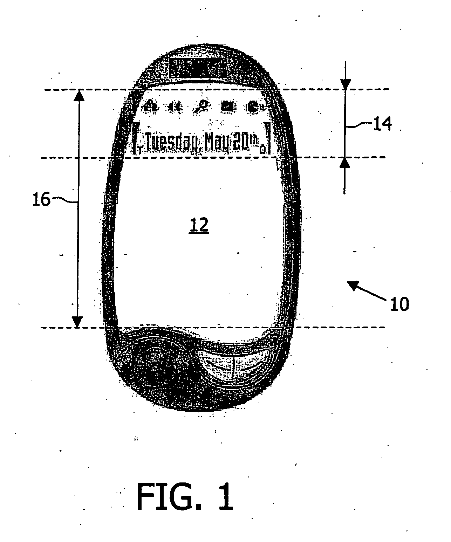

Figure 1 shows a portable device 10 of the invention having a display 12. The display is operable in two modes. In a first mode, only a portion 14 of the display is operated, and this provides a limited amount of standby information, for example icons which indicate various status information, the time, a battery level, and so on. In a full display mode, the whole display 16 is used.

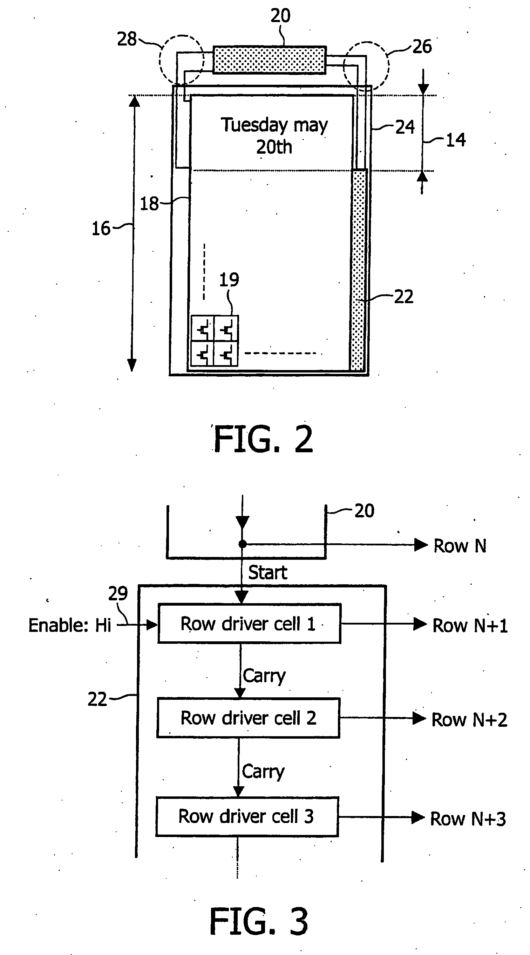

As shown in Figure 2, the display has an array 18 of display pixels 19 arranged in rows and columns and provided on a common (typically glass) substrate 24. Each pixel 19 has a thin film transistor shown schematically in Figure 2, and the pixel layout can have one of many different known designs.

As shown in Figure 2, the row driver circuitry for addressing the rows of pixels comprises a first row driver circuit 20 for a first sub-set of the rows of pixels, which define the display area 14, and a second row driver circuit 22 for a second sub-set of the rows of pixels which define the remainder of the display area 16.

The first row driver circuit 20 comprises an integrated circuit on a separate substrate to the common substrate 24 of the display pixels, and the second row driver circuit 22 comprises circuitry integrated onto the common substrate 24.

This arrangement enables a high quality off-substrate row driver 20 to be used for a partial display portion. This part of the row driver circuit is most prone to ageing effects as the partial display area is used for the standby mode, which will represent the majority of the time, as well as the full display mode. An on-substrate row driver 22 is used for the remaining part of the display as the time for which this part of the display is used can be less. Thus, even though the technology used is more affected by ageing, these affects are limited by the relatively short periods during which the display is operated in full display mode.

The circuit 20 provides a control signal to the circuit 22, as will be discussed below, as well as clock signals. These are represented as 26, and the control signal can in practice comprise the row signal for the last row of the display portion 14. The connections from the circuit 20 to the rows for portion 14 are shown as 28.

In one example, the array of display pixels comprises an active matrix pixel array which is formed using amorphous silicon thin film technology, and each pixel comprises at least one thin film amorphous silicon transistor. The second row driver circuit 22 is formed from the same amorphous silicon thin film technology. The first row driver circuit 20 comprises a crystalline silicon integrated circuit.

As shown in Figures 1 and 2, the first sub-set of rows of pixels for the portion 14 comprises a block of rows at the top of the display. This means the driving of the full display can comprise a sequential operation of the two row driver circuits, with the column driver circuit (not shown) operated in conventional manner.

This arrangement enables a simple interface between the row driver circuits 20,22. In particular, in a full display mode, the last row of the row driver 20 provides the start pulse to the on-glass row driver circuit 22.

Figure 3 shows this approach. The row driver circuit 20 provides row address pulses for rows 1 to N, and the pulse for Row N provides the start pulse for the circuit 22 as shown, for the full display mode. Thus, the Row N signal replaces the frame sync signal conventionally used to trigger the generation of the first row pulse in a conventional row driver circuit. An enable signal 29 is used to control the display mode, and in the enabled state, the row pulses for all rows are provided.

For operation in the partial (standby) display mode, the circuit 22 includes a circuit portion which is switched on by the last row output pulse (Row N) of the driver circuit 20, and this is used to connect all of the rows driven by the row driver circuit 22 to the row off voltage.

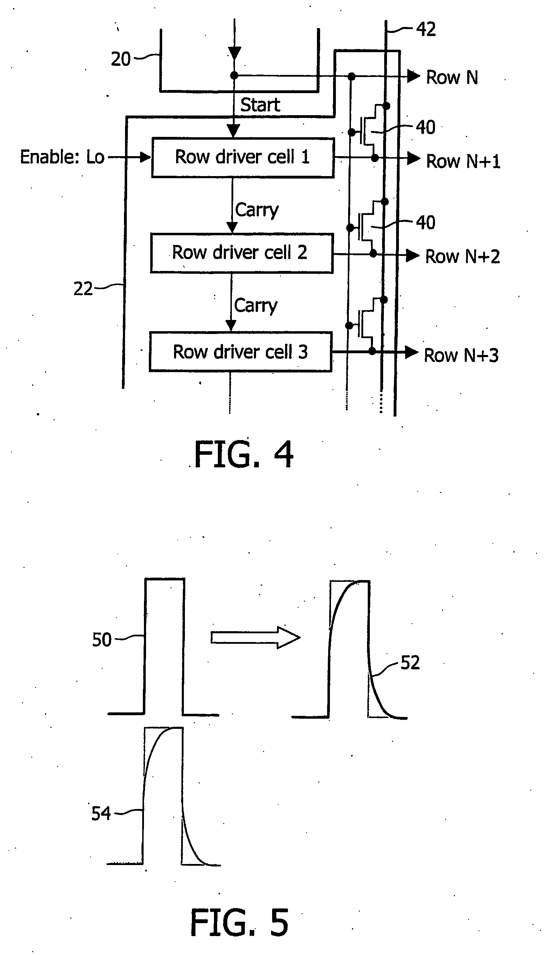

This arrangement is shown in Figure 4. This mode is provided by the low enable signal. As shown, the Row N pulse is used to switch on a bank of transistors 40 which connect the row lines to the row off voltage on line 42. This ensures the rows are all held off to avoid image artifacts. This circuit can be triggered once per frame or less often.

The voltage on the line 42 can be controlled as part of the enable operation, so that in the enable high mode of Figure 3, the bank of transistors 40 is turned off-and plays no role at all (hence its omission from Figure 3) whereas in the enable low mode of Figure 4, they act to turn off all rows simultaneously, and the circuit 22 fails to latch.

The refresh rate is preferably the same in the partial and full display modes. In the partial display mode, there is more time available for each line, and either the line time can be increased (for example using guard periods) or else a pause can be present after the addressing of Row N and before the next frame sync pulse. In the full display mode, the frame period is divided equally between the full set of rows.

As discussed above, the Row N signal provides the start pulse to the first row driver cell (i.e. latch circuit) of the circuit 20. The row pulses of the circuit 20 are shaped so that the row pulses have a similar shape to the row pulses from the on-glass row driver circuit 22. This ensures similar coupling of voltages and avoids a visible image artifact. Thus, the row pulses produced by the first and second row driver circuits 20, 22 are designed to have substantially the same shape.

Figure 5 shows the row pulse 50 produced by the integrated circuit row driver, with steep rising and falling edges.

The conversion of the pulse shape 50 to the pulse shape shown (exaggerated) as 52 can be achieved by adding resistance to the output of the row driver 20 or by other means. The end result is that all rows see the same row address pulses. An output pulse for the thin film driver circuit is shown as 54.

In the example above, the partial display area is used in both modes. However, it could instead be turned off when the larger display area is to be used, so that the two row drivers could be driven independently but with a common column driver. The advantages of the invention could still be obtained as the standby mode will be on for a longer time than the full on mode, so that even though the partial display is turned off when the remainder of the display is used, it is still subject to greater ageing effects and thereby benefits from implementation as a crystalline silicon circuit.

The column driver circuit has not been described in this application, as it will be conventional in design. Of course it will need to be controlled differently in the different modes of operation to have timing appropriate with the control of the row driver circuits.

As mentioned above, the invention is particularly suitable for displays implemented using amorphous silicon. However, the invention is also applicable to other display technologies, for example polymer thin film transistors. Furthermore, the invention has been described in connection with liquid crystal displays, although it may equally be applied to electroluminescent displays and other display technologies.

The specific designs of the row driver circuit have not been described, as these will essentially comprise conventional shift register circuits. The modification required to implement the invention relates to the timing of operation of the two circuits, and this has been described above. The on-glass circuit 22 preferably comprises a low impedance amorphous silicon gate driver circuit.

Many different types of device can benefit from the invention, indeed any device in which it is desirable to have a limited amount of information displayed in a standby mode. Such a device may be a mobile telephone, personal digital assistant, music or video playback device or other portable computing device.

It will therefore be apparent that there are numerous variations to the specific circuit described in detail, and many other modifications will be apparent to those skilled in the art.

## Claims

1. A display device comprising:
an array (18) of display pixels arranged in rows and columns and provided on a common substrate (24);
a first row driver circuit (20) for a first sub-set of the rows of pixels; and
a second row driver circuit (22) for a second sub-set of the rows of pixels,
**characterized in that** the first row driver circuit (20) comprises an integrated circuit on a separate substrate to the common substrate of the display pixels, and the second row driver circuit (22) comprises circuitry integrated onto the common substrate.

2. A device as claimed in claim 1, wherein the array (18) of display pixels comprises an active matrix pixel array.

3. A device as claimed in claim 2, wherein the active matrix pixel array is formed using thin film technology, and each pixel comprises at least one thin film transistor.

4. A device as claimed in any preceding claim, wherein the display pixels each comprise an amorphous silicon transistor, and the second row driver circuit (22) comprises an amorphous silicon circuit.

5. A device as claimed in any preceding claim, wherein the first row driver circuit (20) comprises a crystalline silicon integrated circuit.

6. A device as claimed in any preceding claim, wherein the first sub-set of rows of pixels comprise a block of rows (14) at the top or bottom of the display.

7. A device as claimed in claim 6, wherein the first sub-set of rows (14) form a partial display area for operation in a low power mode with the second sub-set of rows turned off.

8. A device as claimed in any preceding claim, wherein a timing signal (Row N) is provided from one (20) of the first and second row driver circuits to the other (22) of the first and second row driver circuits, such that the operation of the first and second row driver circuits (20,22) is sequential.

9. A device as claimed in claim 8, wherein the first sub-set of rows (14) are at the top of the display area, and wherein the operation of the second row driver circuit (22) is triggered by an output (Row N) from the first row driver circuit.

10. A device as claimed in claim 9, wherein the operation of the second row driver circuit (22) is triggered by an output from the last row signal (Row N) of the first row driver circuit (20).

11. A device as claimed in any preceding claim, wherein each row driver circuit provides row pulses for the respective sub-set of rows, and
wherein the row pulses (50,54) produced by the first and second row driver circuits are designed to have substantially the same shape.

12. A device as claimed in claim 11, wherein the first row driver circuit comprises shaping means for altering the row pulse shape to match the shape of the row pulses of the second driver circuit.

13. A device as claimed in any preceding claim, comprising a liquid crystal display.

14. A portable device (10) comprising a display (12) as claimed in any preceding claim, having a full display mode and a standby display mode.

15. A method of driving a display device comprising an array (18) of display pixels on a common substrate (24), the method comprising:
in a first mode, driving a first sub-set (14) of the rows using a first integrated circuit row driver circuit (20) and not driving a second sub-set of the rows;
in a second mode driving the second sub-set of the rows_using a second row driver circuit (22) which is integrated onto the common substrate.

16. A method as claimed in claim 15, wherein the first mode further comprises driving the first sub-set of the rows (14) using the first integrated circuit row driver circuit (20).

17. A method as claimed in claim 15 or 16, wherein the second row driver circuit (22) comprises an amorphous silicon circuit and the pixels each comprise at least one amorphous silicon transistor.

18. A method as claimed in claim 15, 16 or 17, wherein the first row driver circuit (20) comprises a crystalline silicon integrated circuit.

19. A method as claimed in anyone of claims 15 to 18, further comprising providing a timing signal (Row N) from one (20) of the first and second row driver circuits to the other (22) of the first and second row driver circuits, such that in the second mode the operation of the first and second row driver circuits (20,22) is sequential.

20. A method as claimed in claim 19, wherein the first sub-set of rows (14) are at the top of the display area, and wherein the method comprises, in the second mode, triggering the operation of the second row driver circuit (22) using an output (Row N) from the first row driver circuit.

21. A method as claimed in claim 20, wherein the output of the first row driver circuit (20) used to trigger the operation of the second row driver circuit (22) comprises the last row signal (Row N) of the first row driver circuit.

22. A method as claimed in anyone of claims 15 to 21, further comprising reshaping the row pulses (50) of the first row driver circuit to have the same shape as the row pulses (54) of the second row driver circuit.

## Patentansprüche

1. Eine Display- Vorrichtung umfassend:
eine Array (18) von Display- Pixeln , angeordnet in Zeilen und Spalten die sich auf einer gemeinsamen Substrat (24) befinden ;
eine erste Zeilen- Treiber- Schaltung (20) für eine erste Untergruppe an Pixel- Zeilen;
und eine zweit Zeilen- Treiber- Schaltung (22) für eine zweite Untergruppe an Pixel-Zeilen, **dadurch gekennzeichnet, dass** die erste Zeilen- Treiber- Schaltung (20) eine integrierte Schaltung auf einem von dem gemeinsamen Substrat separaten Substrat der Display- Pixel umfasst, und die zweite Zeilen- Treiber- Schaltung (22) umfasst eine Schaltung die auf dem gemeinsamen Substrat integriert ist.

2. Eine Vorrichtung wie in Anspruch 1 beansprucht, wobei das Array (18) der Display- Pixel ein Aktivmatrix-Pixel-Array umfasst.

3. Eine Vorrichtung wie beansprucht in Anspruch 2, wobei das aktive Matrix Pixel- Array entsteht, indem eine Dünnschichttechnologie benutzt wird und jeder Pixel mindestens ein Dünnfilmtransistor umfasst.

4. Eine Vorrichtung wie in jedem der vorangehenden Ansprüche beansprucht, wobei die Display- Pixel jeweils einen amorphen Silizium- Transistor und die zweite Zeilen- Treiber- Schaltung (22) eine Amorphe- Silizium- Schaltung umfasst.

5. Eine Vorrichtung wie in jedem der vorangehenden Ansprüche beansprucht, wobei die erste Zeilen- Treiber- Schaltung (20) eine integrierte Kristalline- Silizium-Schaltung umfasst.

6. Eine Vorrichtung wie in jedem der vorangehenden Ansprüche beansprucht, wobei die erste Untergruppe an Pixel- Zeilen einen Block von Zeilen (14) am oberen oder unteren Rand des Displays umfasst.

7. Eine Vorrichtung wie in Anspruch 6 beansprucht, wobei die erste Untergruppe an Zeilen (14) einen kleineren Anzeigebereich zum Betrieb in einem Modus mit niedriger Leistung bildet, wobei die zweite Untergruppe von Zeilen abgeschaltet ist.

8. Eine Vorrichtung wie in jedem der vorangehenden Ansprüche beansprucht, wobei ein Zeitsteuerungssignal (Reihe N) von einem (20) der ersten und zweiten ZeilenTreiber- Schaltung an die andere (22) der ersten und zweiten Zeilentreiberschaltungen bereitgestellt wird, so dass der Betrieb der ersten und zweiten Reihentreiberschaltung (20,22) sequenziell ist.

9. Eine Vorrichtung wie in Anspruch 8 beansprucht, wobei die erste Untergruppe an Zeilen (14) an der Oberseite des Displays ist, und wobei der Betrieb der zweiten Zeilen- Treiber- Schaltung (22) durch ein Ausgangssignal (Reihe N) aus der ersten Zeilen- Treiber- Schaltung ausgelöst wird.

10. Eine Vorrichtung wie in Anspruch 9 beansprucht, wobei der Betrieb der zweiten Zeilen- Treiber- Schaltung (22) durch ein Ausgangssignal von dem letzten Reihen-Signal (Reihe N) der ersten Zeilen- Treiber- Schaltung (20) ausgelöst wird.

11. Eine Vorrichtung wie in jedem der vorangehenden Ansprüche beansprucht, wobei jede Zeilen- Treiber- Schaltung Impulse für die jeweiligen Zeile der Untergruppe liefert, und wobei die Zeilen- Impulse (50,54), die durch die erste und zweite Zeilentreiberschaltungen hergestellt werden, so ausgelegt sind, dass sie im wesentlichen die gleiche Form aufweisen.

12. Eine Vorrichtung wie in Anspruch 11 beansprucht, wobei die erste ZeilenTreiber- Schaltung eine Formungseinrichtung zum Verändern der Zeilenpuls-Form umfasst, um mit der Form der Zeilenpulse der zweiten Treiberschaltung übereinzustimmen.

13. Eine Vorrichtung wie in jedem der vorangehenden Ansprüche beansprucht, welches ein Flüssigkristalldisplay beinhaltet.

14. Eine tragbare Vorrichtung (10) mit einem Display (12) wie in jedem der vorangehenden Ansprüche beansprucht, mit einem Voll- Display- Modus und einem Standby- Displaymodus.

15. Ein Verfahren zum Treiben einer Display-Vorrichtung welche eine Array (18) an Display- Pixeln auf einem gemeinsamen Substrat (24) umfasst, das Verfahren umfasst:
in einem ersten Modus, das Betreiben einer ersten Untergruppe (14) der Zeilen die eine erste integrierte Zeilen- Treiber- Schaltung nutzen (20) und nicht eine zweite Untergruppe an Zeilen treibt;
in einer zweiten Betriebsart wird die zweite Teilmenge an Zeilen unter Verwendung einer zweiten Zeilen- Treiber- Schaltung (22) betrieben, die auf dem gemeinsamen Substrat integriert ist.

16. Ein Verfahren nach Anspruch 15, wobei die erste Betriebsart folgendes umfasst:
Betreiben der ersten Untergruppe der Zeilen (14) mit der ersten integrierten Zellen-Treiber- Schaltung (20).

17. Ein Verfahren nach Anspruch 15 oder 16, wobei die zweite Zeile der Treiberschaltung (22) eine amorphe Silizium- Schaltung umfasst und die Pixel jeweils aus mindestens einem amorphem Silizium- Transistor bestehen.

18. Ein Verfahren nach Anspruch 15, 16 oder 17, wobei die erste Zeilen- TreiberSchaltung (20) eine integrierte kristalline Silizium- Schaltung beinhaltet.

19. Ein Verfahren nach einem der Ansprüche 15 bis 18, ferner umfassend das Bereitstellen eines Zeitsteuerungssignals (Reihe N) von einem (20) der ersten und der zweiten Zeilentreiberschaltungen an die andere (22) der ersten und zweiten Zeilentreiberschaltungen, sodass in der zweiten Betriebsart das Betreiben der ersten und zweiten Zeilentreiberschaltungen (-20, 22) sequentiell ist.

20. Ein Verfahren nach Anspruch 18, wobei die erste der Zellenuntergruppe (14) am oberen Rand des Displays ist, und wobei das Verfahren in der zweiten Betriebsart das Auslösen des Betriebs der zweiten Zeilentreiber-Schaltung (22) unter Verwendung eines Ausgangssignals (Reihe N) aus der ersten Zeilen- TreiberSchaltung umfasst.

21. Verfahren nach Anspruch 20, wobei das Ausgangssignal der ersten ZeilenTreiber- Schaltung (20), das benutzt wird, um den Betrieb des zweiten ZeilenTreiber- Schaltung auszulösen (22), das letzte Zeilensignal (Reihe N) der ersten Zeilentreiberschaltung umfasst.

22. Ein Verfahren nach einem der Ansprüche 15 bis 21, ferner umfassend das erneute Formen der Zeilenimpulse (50) der ersten Zeilentreiberschaltung, um die gleiche Form wie die Zeilenimpulse (54) der zweiten Zeilen- Treiber- Schaltung aufzuweisen.

## Revendications

1. A dispositif d'affichage comprenant :
une matrice (18) de pixels d'affichage disposés en rangées et en colonnes et fournie sur un substrat commun (24) ;
un premier circuit de commande de rangées (20) pour un premier sous-ensemble de rangées de pixels ; et
un second circuit de commande de rangées (22) pour un second sous-ensemble de rangées de pixels,
**caractérisé en ce que** le premier circuit de commande de rangées (20) comporte un circuit intégré sur un substrat séparé du substrat commun des pixels d'affichage, et le second circuit de commande de rangées (22) comporte des circuits intégrés sur le substrat commun.

2. Un dispositif tel que revendiqué dans la revendication 1, dans lequel la matrice (18) de pixels d'affichage comporte une matrice de pixels active.

3. Un dispositif tel que revendiqué dans la revendication 2, dans lequel la matrice de pixels active est formée au moyen d'une technologie de film mince, et chacun des pixels comporte au moins un transistor à film mince.

4. Un dispositif tel que revendiqué dans l'une quelconque des revendications précédentes, dans lequel les pixels d'affichage comportent chacun un transistor silicium amorphe, et le second circuit de commande de rangées (22) comporte un circuit de silicium amorphe.

5. Un dispositif tel que revendiqué dans l'une quelconque des revendications précédentes, dans lequel le premier circuit de commande de rangées (20) comporte un circuit intégré à silicium cristallin.

6. Un dispositif tel que revendiqué dans l'une quelconque des revendications précédentes, dans lequel le premier sous-ensemble de rangées de pixels comporte un bloc de rangées (14) vers le haut ou le bas de l'affichage.

7. Un dispositif tel que revendiqué dans la revendication 6, dans lequel le premier sous-ensemble de rangées (14) forme une surface d'affichage partielle pour un fonctionnement dans un mode basse consommation avec l'extinction du second sous-ensemble de rangées.

8. Un dispositif tel que revendiqué dans l'une quelconque des revendications précédentes, dans lequel un signal d'horloge (Rangée N) est fourni à partir de l'un (20) des premier et second circuit de commande de rangées vers l'autre des premier et second circuit de commande de rangées, de manière à permettre un séquencement du fonctionnement des premier et second circuits de commande de rangées (20, 22).

9. Un dispositif tel que revendiqué dans la revendication 8, dans lequel le premier sous-ensemble de rangées (14) se trouve au dessus de la surface d'affichage, et dans lequel le fonctionnement du second circuit de commande de rangées (22) est déclenché par une sortie (Rangée N) du premier circuit de commande de rangées.

10. Un dispositif tel que revendiqué dans la revendication 9, dans lequel le fonctionnement du second circuit de commande de rangées (22) est déclenché par une sortie du dernier signal de rangées (Rangée N) du premier circuit de commande de rangées (20).

11. Un dispositif tel que revendiqué dans l'une quelconque des revendications précédentes, dans lequel chacun des circuits de commande de rangées fournit des pulses de rangées pour les sous-ensembles respectifs de rangées, et dans lequel les pulses de rangées (50, 54) produits par les premier et second circuits de commande de rangées sont conçues de forme substantiellement similaire.

12. Un dispositif tel que revendiqué dans la revendication 11, dans lequel le premier circuit de commande de rangée comporte des moyens de mise en forme pour altérer la forme du pulse de rangée de manière à correspondre à la forme des pulses de rangée du second circuit de commande.

13. Un dispositif tel que revendiqué dans l'une quelconque des revendications précédentes, comprenant un affichage à cristaux liquides.

14. Un dispositif portable (10) comprenant un affichage (12) tel que revendiqué dans l'une quelconque des revendications précédentes, ayant un mode d'affichage complet et un mode d'affichage de réserve.

15. Une méthode de commande d'un dispositif d'affichage comprenant une matrice (18) de pixels d'affichage sur un substrat commun (24), la méthode comportant :
la commande, dans un premier mode de fonctionnement, d'un premier sous-ensemble (14) de rangées en utilisant un premier circuit intégré de commande de rangées (20) tout en ne commandant pas un second sous-ensemble de rangées ;
la commande, dans un second mode, du second sous-ensemble de rangées en utilisant un second circuit de commande de rangées (22) qui est intégré sur le substrat commun.

16. Une méthode telle que revendiquée dans la revendication 15, dans laquelle le premier mode comporte en outre la commande du premier sous-ensemble de rangées (14) en utilisant le premier circuit intégré de commande de rangées (20).

17. Une méthode telle que revendiquée dans les revendication 15 ou 16, dans laquelle le second circuit de commande de rangées (22) comporte un circuit en silicium amorphe et les pixels comportent chacun au moins un transistor en silicium amorphe.

18. Une méthode telle que revendiquée dans les revendications 15, 16 ou 17, dans laquelle le premier circuit de commande de rangées (20) comporte un circuit intégré en silicium cristallin.

19. Une méthode telle que revendiquée dans l'une quelconque des revendications 15 à 18, comprenant en outre la mise à disposition d'un signal d'horloge (Rangée N) depuis l'un (20) des premier et second circuits de commande de rangées vers l'autre (22) des premier et second circuits de commande de rangées, de manière à permettre, dans le second mode, un séquencement du fonctionnement des premier et second circuits de commande de rangées (20, 22).

20. Une méthode telle que revendiquée dans la revendication 19, dans laquelle le premier sous-ensemble de rangées (14) se trouve vers le haut de la surface d'affichage, et dans laquelle la méthode comporte, dans le second mode, le déclenchement du fonctionnement du second circuit de commande de rangées (22) en utilisant une sortie (Rangée N) du premier circuit de commande de rangées.

21. Une méthode telle que revendiquée dans la revendication 20, dans laquelle la sortie du premier circuit de commande de rangées (20) utilisée pour déclencher le fonctionnement du second circuit de commande de rangées (22) comporte le dernier signal de rangées (Rangée N) du premier circuit de commande de rangées.

22. Une méthode telle que revendiquée dans l'une quelconque des revendications 15 à 21, comportant en outre la remise en forme des pulses de rangées (50) du premier circuit de commande de rangées pour les rendre de forme semblables aux pulses de rangées (54) du second circuit de commande de rangées.
